# EUROPÄISCHE PATENTANMELDUNG

(11) **EP 4 751 562 A1**
(43) Veröffentlichungstag der Anmeldung: **03.06.2026**
(21) Anmeldenummer: 24216621.3
(22) Anmeldetag: 29.11.2024
(51) Int. Cl.: A01K 5/01

(54) **TIERFUTTERMITTELBEHÄLTER**

(71) Anmelder: Von Arx, Daniel, 1820 Montreux (CH)
(72) Erfinder: Von Arx, Daniel, 1820 Montreux (CH)
(74) Vertreter: EGLI-EUROPEAN PATENT ATTORNEYS

(57) **Zusammenfassung**

Die vorliegende Erfindung betrifft einen Tierfuttermittelbehälter (1), der eine zuverlässige und kontrollierte Futterzufuhr für Nutz- und Wildtiere, insbesondere für Pferde, ermöglicht. Der Behälter umfasst ein Gehäuse (2) mit einer Bodenplatte (2a), zwei Seitenwänden (2b, 2c), einer Vorderwand (2d) und einer Rückwand (2e). Innerhalb des Gehäuses (2) ist eine vertikal verschiebbare Plattform (3) zur Lagerung von Tierfuttermittel angeordnet. Ein federbetätigter Mechanismus (4) hebt die Plattform automatisch in Richtung der oberen Öffnung (2f) an, während das Betätigungselement (5), ein Fußpedal, die Plattform (3) in eine abgesenkte Position bringt und fixiert, um das Einfüllen von Tierfuttermittel, insbesondere Heu, durch eine seitliche Öffnung zu erleichtern. Nach dem Lösen des Betätigungselements (5) hebt der Mechanismus (4) die Plattform wieder an, wodurch eine kontinuierliche und rationierte Futterzufuhr gewährleistet wird.

## Beschreibung

### Gebiet der Erfindung

Die vorliegende Erfindung betrifft einen Tierfuttermittelbehälter zur unterstützten Lagerung und kontrollierten Abgabe von Tierfuttermitteln, insbesondere Heu, für Nutz- und Wildtiere.

### Hintergrund der Erfindung

Tierfuttermittel, insbesondere Heu, sind von zentraler Bedeutung für die Ernährung von Nutz- und Wildtieren. Heu wird vor allem für Tiere wie Pferde, Kühe und andere Pflanzenfresser verwendet, die auf eine regelmäßige Zufuhr von ballaststoffreichem Futter angewiesen sind, um ihre Verdauung gesund zu halten und eine optimale Nährstoffaufnahme zu gewährleisten. Traditionell wird Heu in großen Ballen von 22 bis 35 Kilogramm gelagert und manuell verteilt. Diese Heuballen werden häufig lose in den Stall oder auf Weiden geworfen, sodass die Tiere das Futter direkt vom Boden aufnehmen müssen. Diese Praxis hat jedoch sowohl gesundheitliche als auch wirtschaftliche Nachteile.

Ein Hauptproblem bei der herkömmlichen Methode, Heu direkt auf den Boden zu legen, ist die unkontrollierte Futteraufnahme der Tiere. Pferde beispielsweise haben, wenn sie freien Zugang zu großen Mengen Heu haben, die Tendenz, übermäßig viel zu fressen. Dies liegt daran, dass Pferde in freier Wildbahn natürlicherweise dazu veranlagt sind, kontinuierlich zu grasen und über den Tag hinweg in kleinen Mengen Futter aufzunehmen, was ihrer natürlichen Verdauungsphysiologie entspricht. In einem Stall, wo das Heu lose und in großen Mengen vorliegt, können sie jedoch große Mengen in kurzer Zeit zu sich nehmen, was häufig zu Verdauungsproblemen führt. Dies kann Verstopfungen, Koliken und andere ernste gesundheitliche Probleme verursachen, die tierärztliche Eingriffe erfordern. Die Behandlung solcher Probleme ist nicht nur kostenintensiv, sondern kann auch eine ernsthafte Gefahr für die Gesundheit und das Leben der Tiere darstellen.

Zusätzlich zu den gesundheitlichen Risiken bringt das lose Auslegen von Heu weitere Nachteile mit sich. Da das Heu direkt auf den Stallboden geworfen wird, kommt es in Kontakt mit Mist und Urin, was die Futterqualität stark beeinträchtigt. Heu, das mit Kot und Urin kontaminiert ist, wird von den Tieren oft nicht gefressen, was zu erheblichem Futterverlust führt. Diese Verschwendung ist besonders problematisch, da hochwertiges Heu in vielen Teilen der Welt, insbesondere in Europa, aufgrund der gestiegenen Nachfrage immer teurer wird.

Ein erheblicher Teil der europäischen Heuproduktion wird als Tierfutter in Länder wie Saudi-Arabien exportiert, was in den lokalen Märkten zu einer Verknappung und zu steigenden Preisen führt.

Um diesen Problemen entgegenzuwirken, wurden verschiedene Systeme zur Futterabgabe entwickelt, um die Fütterungsprozesse zu verbessern. Eine verbreitete Methode, um die Futteraufnahme zu kontrollieren, ist die Verwendung von Netzen, in die das Heu verpackt und aufgehängt wird. Diese Netze ermöglichen es den Tieren, das Heu langsam abzuzupfen, ähnlich wie beim Grasen in der Natur. Der Vorteil dieser Methode besteht darin, dass die Tiere nicht unbegrenzt Futter aufnehmen können, was das Risiko von Verdauungsproblemen verringert. Allerdings hat sich diese Methode in der Praxis als wenig praktikabel erwiesen. Die Netze müssen regelmäßig gewartet und überprüft werden, da sie bei Beschädigung oder Abnutzung ihre Funktion verlieren und das Heu wieder unkontrolliert zugänglich wird. Zudem ist das Befüllen und Aufhängen der Netze arbeitsintensiv und zeitaufwendig, was insbesondere in größeren Betrieben oder Pferdeställen, in denen mehrere Tiere gleichzeitig gefüttert werden müssen, zu einer erheblichen Belastung führt.

Neben den Netzen gibt es auch kommerzielle Futterboxen, die eine kontrollierte Futterabgabe ermöglichen sollen. Diese Systeme sind darauf ausgelegt, die Futtermenge und -frequenz zu regulieren, um eine übermäßige Futteraufnahme zu verhindern. Viele dieser Futterboxen bieten jedoch nur begrenzte Anpassungsmöglichkeiten und sind oft nicht in der Lage, die individuellen Futterbedürfnisse verschiedener Tiere zu berücksichtigen. Außerdem sind sie in der Bedienung oft kompliziert und erfordern einen hohen Wartungsaufwand. Außerdem kann sich die Futterqualität in solchen Systemen schnell verschlechtern, insbesondere wenn das Heu zu trocken wird, was zu Atemwegsproblemen oder Allergien bei den Tieren führen kann.

In modernen Tierhaltungsbetrieben, insbesondere bei der Haltung von Pferden, besteht daher ein erheblicher Bedarf an einer effizienten, kostengünstigen und benutzerfreundlichen Lösung zur Futterabgabe. Besonders in Wintermonaten, wenn Wildtiere wie Rehe auf menschliche Futterversorgung angewiesen sind, ist ebenfalls eine gleichmäßige Futterverteilung unerlässlich, um den Tieren ein kontinuierliches Nahrungsangebot zu bieten.

### Aufgabe der Erfindung

Vor diesem Hintergrund besteht die Aufgabe der vorliegenden Erfindung darin, einen Tierfuttermittelbehälter bereitzustellen, der eine zuverlässige, anpassungsfähige und leicht zu bedienende Lösung zur Futterlagerung und -abgabe bietet.

### Zusammenfassung der Erfindung

Die vorliegende Aufgabe wird erfindungsgemäß durch einen Tierfuttermittelbehälter mit den Merkmalen des unabhängigen Patentanspruchs 1 gelöst. Bevorzugte Ausführungsformen dieses Tierfuttermittelbehälters sind in den abhängigen Patentansprüchen 2 bis 13 genannt.

Im Einzelnen umfasst ein erfindungsgemäßer Tierfuttermittelbehälter ein Gehäuse mit einer Bodenplatte, zwei Seitenwänden sowie einer Vorderwand und einer Rückwand, eine innerhalb des Gehäuses vertikal verschiebbar geführte Plattform zur Lagerung von Tierfuttermittel, einen federbetätigten Mechanismus zur Anhebung der Plattform in Richtung einer oberen Öffnung des Gehäuses, ein Betätigungselement zur Absenkung und Fixierung der Plattform in einer niedrigen Position, und eine seitliche Öffnung zum Einführen von Tierfuttermittel in den Tierfuttermittelbehälter, wenn die Plattform in der niedrigen Position fixiert ist, wobei der federbetätigte Mechanismus so konfiguriert ist, dass nach dem Lösen des Betätigungselements die Plattform in Richtung der oberen Öffnung gedrückt wird, um eine kontinuierliche Tierfuttermittelzufuhr zu gewährleisten.

Der erfindungsgemäße Tierfuttermittelbehälter ermöglicht eine kontrollierte, kontinuierliche Futterzufuhr, die den natürlichen Fressgewohnheiten von Tieren wie Pferden entspricht. Durch den federbetätigten Mechanismus wird das Futter gleichmäßig nach oben gedrückt, wodurch das Risiko von Überfressen und Verdauungsstörungen verringert wird. Zudem bleibt das Heu in dem geschlossenen Gehäuse vor Verunreinigungen durch Mist und Urin geschützt, was die Futterqualität erhält und Verluste reduziert. Die seitliche Öffnung erleichtert das Nachfüllen, während das Betätigungselement die Plattform absenkt und fixiert. Dies spart Arbeitsaufwand und minimiert Heuverschwendung, was zu niedrigeren Futterkosten führt. Insgesamt bietet der Behälter eine effiziente und tiergerechte Fütterungslösung, die sowohl die Tiergesundheit fördert als auch die Wirtschaftlichkeit in Tierhaltungsbetrieben steigert.

Es ist bevorzugt, dass das Gehäuse und/oder die Plattform aus Edelstahl, insbesondere Inox, und/oder Kunststoff gefertigt sind.

Die Materialien Edelstahl und Kunststoff bieten Haltbarkeit, Hygiene und einfache Handhabung des Behälters.

Ferner ist es bevorzugt, dass die Plattform eine horizontale Grundplatte aufweist, die auf ihrer der oberen Öffnung zugewandten Oberseite das Tierfuttermittel trägt und an ihrer der Bodenplatte zugewandten Unterseite mehrere, bevorzugt vier in den Eckbereichen der Grundplatte angeordnete, Hülsen aufweist, wobei jede Hülse als Außenführung für eine sich vertikal erstreckende zylindrische Druckfeder dient, die sich mit ihrer Oberseite an der Unterseite der Bodenplatte abstützt und eine vertikale Druckkraft nach oben gegen die Plattform ausübt.

Diese bevorzugte Ausführungsform des erfindungsgemäßen Tierfuttermittelbehälters mit Hülsen als Außenführung für die Druckfedern gewährleistet eine gleichmäßige Verteilung der Federkraft und verhindert das Verkanten der Plattform. Dadurch wird das Futter kontinuierlich nach oben gedrückt und kontrolliert freigegeben, was der natürlichen Futteraufnahme der Tiere entspricht. Diese gleichmäßige Anhebung der Plattform minimiert Futterverschwendung und unterstützt die Gesundheit der Tiere durch kontrollierte Futterzufuhr.

In diesem Zusammenhang ist es außerdem bevorzugt, dass bei vier in den Eckbereichen der Plattform angeordneten Hülsen zwei Hülsen, die sich jeweils in einer Richtung senkrecht zur Vorderwand und Rückwand gegenüberliegen, durch eine feste Querverstrebung miteinander verbunden sind, und die beiden Querverstrebungen wiederum durch eine feste Längsverstrebung, die senkrecht zu den Seitenwänden verläuft, miteinander verbunden sind.

Die bevorzugte Ausführungsform mit Querverstrebungen und Längsverstrebung stabilisiert die Plattform und verhindert ein Verkanten. Dies gewährleistet eine gleichmäßige Verteilung der Druckkraft und eine zuverlässige Anhebung des Futters. Die erhöhte strukturelle Steifigkeit sorgt für eine gleichmäßige Futterabgabe und verbessert die Langlebigkeit sowie die Betriebssicherheit des Behälters.

Darüber hinaus ist es in diesem Zusammenhang bevorzugt, dass die Bodenplatte mehrere, bevorzugt vier in Eckbereichen der Bodenplatte angeordnete, Säulen aufweist, wobei jede Säule als Innenführung für die sich vertikal erstreckende zylindrische Druckfeder dient, die sich mit ihrer Unterseite an der Bodenplatte abstützt und eine vertikale Druckkraft nach oben gegen die Plattform ausübt.

Diese Ausführungsform mit Säulen in den Eckbereichen der Bodenplatte verbessert die Stabilität des Anhebemechanismus, indem sie die Druckfedern präzise führen und Verkanten der Plattform verhindern. Dies ermöglicht eine gleichmäßige Futterzufuhr, verbessert die Betriebssicherheit und reduziert den Wartungsaufwand, wodurch der Behälter langlebiger wird.

Eine weitere besonders bevorzugte Ausführungsform des erfindungsgemäßen Tierfuttermittelbehälters besteht darin, dass das Betätigungselement ein mit der Plattform fest verbundenes Fußpedal ist, das vom Bediener mittels des Fußes betätigbar und in der niedrigen Position fixierbar ist.

Diese Ausführung mit fest montiertem Fußpedal ermöglicht ein einfaches, freihändiges Absenken und Fixieren der Plattform, erleichtert das Nachfüllen von Futter, erhöht die Sicherheit durch Stabilität der Plattform und reduziert die körperliche Beanspruchung.

In noch einer weiteren bevorzugten Ausführungsform der Erfindung ist vorgesehen, dass an der Bodenplatte ein Verriegelungselement, beispielsweise ein L-förmiger Winkel, befestigt ist, das in der niedrigen Position formschlüssig mit dem Betätigungselement verriegelt ist, um dadurch das Betätigungselement sowie die damit fest verbundene Plattform in der niedrigen Position zu fixieren.

Die Ausführungsform mit einem Verriegelungselement fixiert die Plattform sicher in der niedrigen Position, was das Nachfüllen von Futter erleichtert und verhindert, dass die Plattform unbeabsichtigt angehoben wird. Dies erhöht die Sicherheit und Effizienz, insbesondere beim Umgang mit schweren Heuballen.

Bei noch einer weiteren bevorzugten Ausgestaltung der Erfindung weist die Vorderwand einen sich von der Bodenplatte in vertikaler Richtung erstreckenden Schlitz auf, durch den das Betätigungselement von einem Bediener betätigbar ist.

Diese Ausgestaltung mit einem Schlitz in der Vorderwand ermöglicht eine einfache, sichere Bedienung des Betätigungselements von außen, erleichtert den Fütterungsprozess, verbessert die Ergonomie und erhöht die Effizienz beim Nachfüllen von Futter.

Eine weitere bevorzugte Ausführungsform der Erfindung sieht vor, dass die seitliche Öffnung eine gelenkig befestigte Klappe aufweist, die das einfache Öffnen und Schließen des Gehäuses ermöglicht, wobei die Klappe entweder mit der Vorderwand oder der Rückwand gelenkig verbunden ist und im geschlossenen Zustand die gesamte Seitenwand bildet, oder wobei die Klappe mit der Seitenwand gelenkig verbunden ist und im geschlossenen Zustand einen Teil der Seitenwand bildet.

Diese Ausführungsform mit einer gelenkig befestigten Klappe erleichtert das Nachfüllen von Futter und bietet flexiblen Zugang, indem die Klappe an der Vorder-, Rück- oder Seitenwand angebracht ist. Im geschlossenen Zustand schützt die Klappe das Futter vor äußeren Einflüssen. Je nach Ausführung deckt die Klappe die gesamte oder nur einen Teil der Seitenwand ab, was Bedienung und Schutz des Futters verbessert.

Gemäß einer besonders bevorzugten Ausgestaltung der Erfindung ist eine gitterförmige Abdeckung gelenkig mit der Oberkante der Rückwand verbunden und über eine Verriegelungseinrichtung an der Vorderwand verschließbar, um im geschlossenen Zustand die obere Öffnung abzudecken und eine rationierte Tierfuttermittelzufuhr zu ermöglichen.

Dadurch wird eine kontrollierte Futteraufnahme ermöglicht, da die Tiere das Futter nur in kleinen Mengen durch die gitterförmige Abdeckung abzupfen können. Dies fördert eine gesunde Verdauung und gewährleistet eine einfache Bedienung.

Des Weiteren ist vorzugsweise ein Verschlussdeckel vorgesehen, der gelenkig mit der Oberkante der Rückwand verbunden ist, um die obere Öffnung vollständig zu verschließen und die Aufnahme von Tierfuttermittel zu stoppen, und wobei der Verschlussdeckel bevorzugt eine oder mehrere Einbuchtungen aufweist, die als Kraftfuttermulden dienen.

### Kurzbeschreibung der Zeichnungen

Weitere Merkmale und Vorteile wird der Fachmann dem nachfolgend in Bezug auf die beigefügten Zeichnungen beschriebenen Ausführungsbeispiel entnehmen. Dabei zeigen:
- Fig. 1:: eine perspektivische Gesamtansicht eines bevorzugten Ausführungsbeispiels eines erfindungsgemäßen Tierfuttermittelbehälters;
- Fig. 2:: eine Vorderansicht des Tierfuttermittelbehälters gemäß Fig. 1;
- Fig. 3:: eine vertikale seitliche Querschnittansicht entlang der Schnittlinie A-A in Fig. 2;
- Fig. 4:: eine Draufsicht des Tierfuttermittelbehälters gemäß Fig. 1;
- Fig. 5:: eine perspektivische Einzelansicht des im Tierfuttermittelbehälter gemäß Fig. 1 enthaltenen Gehäuses;
- Fig. 6:: eine Vorderansicht des Gehäuses gemäß Fig. 5;
- Fig.7:: eine Draufsicht des Gehäuses gemäß Fig. 5; und
- Fig. 8:: eine perspektivische Einzelansicht der im Tierfuttermittelbehälter gemäß Fig. 1 enthaltenen Plattform.

### Detaillierte Beschreibung beispielhafter Ausführungsformen

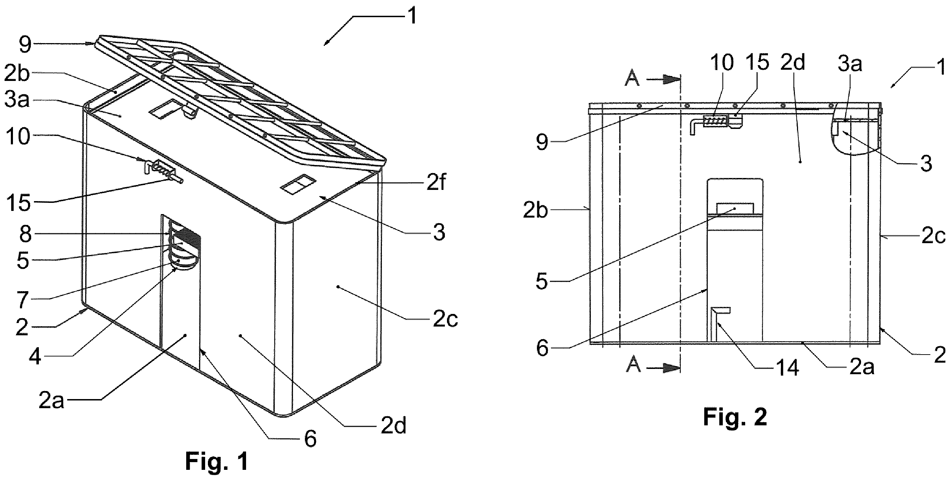

Der erfindungsgemäße Futtermittelbehälter 1 wird in Fig. 1 in einer schematischen, isometrischen Gesamtdarstellung gezeigt. Er umfasst ein kubisch geformtes Gehäuse mit zwei einander parallel gegenüberliegenden Seitenwänden 2b, 2c sowie einer senkrecht dazu angeordneten Vorderwand 2d und Rückwand 2e, die sich ebenfalls parallel gegenüberliegen. Innerhalb des Gehäuses 3 befindet sich eine vertikal verschiebbare Plattform 3, die eine Grundplatte 3a umfasst. Die Oberseite der Grundplatte 3a dient der Lagerung des Tierfuttermittels. In Fig. 1 ist die Plattform 3, auf der kein Tierfuttermittel aufliegt, in ihrer höchsten Position dargestellt, nahe der oberen Öffnung 2f des Gehäuses 2.

Das Gehäuse 2 und/oder die Plattform 3 des erfindungsgemäßen Tierfuttermittelbehälters bestehen aus Edelstahl, insbesondere Inox, und/oder Kunststoff. Edelstahl bietet hohe Festigkeit, Korrosionsbeständigkeit und Hygiene, was ihn ideal für feuchte Stallumgebungen macht. Inox verhindert zudem Rostbildung. Kunststoff ist leichter, kostengünstiger und flexibel formbar, wodurch die Handhabung erleichtert wird. Beide Materialien sind einfach zu reinigen, resistent gegenüber Chemikalien und bieten eine langlebige Lösung, die den Anforderungen in modernen Tierhaltungsbetrieben gerecht wird. Die Kombination dieser Materialien gewährleistet Stabilität, Hygiene und Benutzerfreundlichkeit.

Die Plattform 3 wird durch einen federbetätigten Mechanismus 4 in vertikaler Richtung in Richtung der oberen Öffnung 2f des Gehäuses angehoben. Dieser Mechanismus 4 besteht aus mehreren zylindrischen Druckfedern 8, von denen in Fig. 1 eine zu erkennen ist. Diese Druckfedern 8 üben eine vertikale Kraft auf die Plattform 3 aus, um sie nach oben zu drücken.

Als Tierfuttermittel, das mit dem erfindungsgemäßen Behälter 1 kontrolliert und rationiert einem Tier, insbesondere einem Pferd, zugeführt werden soll, dient Heu. Der Behälter 1 ist jedoch auch für andere Futtermittel wie Silage, Stroh oder Kraftfutter geeignet, die ebenfalls in Ballen oder größeren Mengen verarbeitet werden und eine kontrollierte Futterzufuhr erfordern.

Heuballen sind in einer kubischen Form gepresst und weisen ein beträchtliches Gewicht auf. Für Personen mit geringer körperlicher Konstitution kann das Heben der Heuballen in die obere Öffnung 2f des Tierfuttermittelbehälters 1 eine nicht zu bewältigende Herausforderung darstellen. Aus diesem Grund besitzt eine der Seitenwände 2b eine seitliche Öffnung, die in den Figuren nicht dargestellt ist. Durch diese seitliche Öffnung kann der Heuballen unter Zuhilfenahme eines Schubkarrens mit geringer Körperkraft in den Behälter 1 eingeschoben werden.

Damit der Heuballen seitlich eingeschoben werden kann, muss sich aber die Plattform 3 zwingend in einer niedrigen Position befinden. Um dies zu ermöglichen, muss die Plattform 3 gegen die Federkraft des federbetätigten Mechanismus 4 vertikal nach unten bewegt werden. Hierzu ist ein Betätigungselement 5 in Form eines Fußpedals vorgesehen. Das Fußpedal 5 ist fest mit der Plattform 3 verbunden und innerhalb des Gehäuses 2, beispielsweise auf einer Führungsschiene, beweglich gelagert.

Um das Fußpedal 5 bequem bedienen zu können, ist in der Vorderwand 2d des Gehäuses ein vertikaler Schlitz 6 vorgesehen. Der Bediener kann seinen Fuß in diesen Schlitz 6 einführen und das Fußpedal 5 vertikal nach unten drücken, wodurch sich auch die Plattform 3 vertikal nach unten bewegt. Sobald die Plattform 3 ihre niedrige Position erreicht hat, kann der Heuballen bequem von der Seite auf die Oberseite der Grundplatte 3a geschoben werden.

In Fig. 2, die eine Vorderansicht des Tierfuttermittelbehälters 1 nach Fig. 1 zeigt, ist deutlich der sich von der Bodenplatte 2a des Gehäuses 2 vertikal nach oben erstreckende Schlitz 6 zu erkennen. Dieser Schlitz 6 ist so bemessen, dass er dem vertikalen Hub der Plattform 3 Rechnung trägt, der notwendig ist, um einen Heuballen in das Gehäuse 2 einzuführen und anschließend dem Tier nahezu vollständig zur Verfügung zu stellen. In der niedrigsten Position der Plattform 3 ist die Grundplatte 3a auf einer Höhe positioniert, die ein seitliches Einschieben des Heuballens durch eine Öffnung in der Seitenwand 2b ermöglicht. In der höchsten Position, wie in Fig. 2 dargestellt, befindet sich die Grundplatte 3a nahe an der oberen Öffnung 2f des Gehäuses 2, wodurch das Heu vom Tier nahezu vollständig aufgenommen bzw. gefressen werden kann.

Wie ebenfalls in Fig. 2 dargestellt, ist an der Bodenplatte 2a des Gehäuses ein L-förmiges Verriegelungselement 14 angebracht, welches das Fußpedal 5 in der niedrigsten Plattformposition formschlüssig verriegelt. Diese Verriegelung verhindert, dass die Plattform 3 unter der Wirkung der Kraft des federbetätigten Mechanismus 4 selbstständig wieder nach oben gedrückt wird. Der Bediener, der die Plattform 3 mittels des Fußpedals 5 nach unten bewegt hat, kann nach der Verriegelung des Fußpedals 5 den Heuballen durch die seitliche Öffnung einschieben. Diese Mechanik reduziert den Personalaufwand erheblich.

Zwischen den Außenkanten der Grundplatte 3a und den Innenwänden des Gehäuses 2 bleibt ein freier Spalt, der die störungsfreie vertikale Bewegung der Plattform 3 ermöglicht. Vorzugsweise sind an den Außenkanten der Grundplatte 3a zusätzliche Profile vorgesehen, um zu verhindern, dass Heu in den unteren Bereich des Gehäuses 2 fällt.

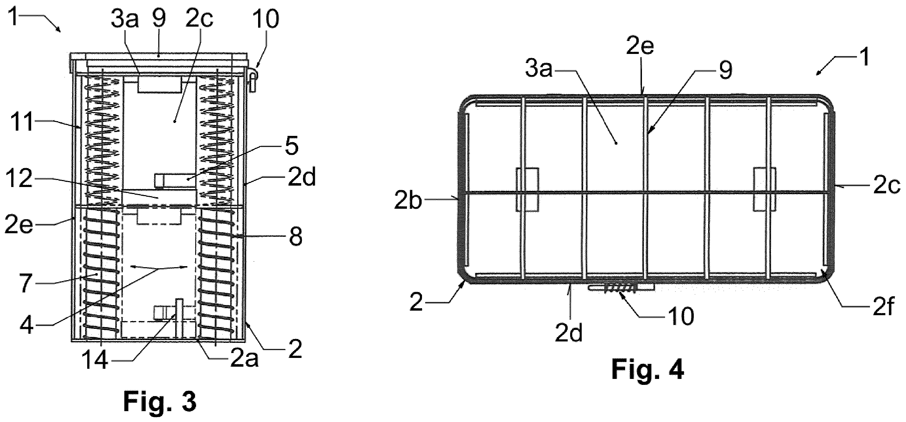

Der innerhalb des Gehäuses 2 installierte federbetätigte Mechanismus 4 zur Anhebung der Plattform 3 in Richtung der oberen Öffnung 2f des Gehäuses ist besonders gut in der vertikalen seitlichen Querschnittsansicht gemäß Fig. 3 zu erkennen. Dieser federbetätigte Mechanismus 4 umfasst vier Druckfedern 8, die sich von den vier Eckbereichen der Bodenplatte 2a des Gehäuses 2 zu den entsprechenden Eckbereichen der Unterseite der Grundplatte 3a der Plattform 3 erstrecken. Nach dem Lösen des Fußpedals 5 aus seiner Verriegelung üben die Druckfedern 8 kontinuierlich eine vertikale Kraft auf die Plattform 3 aus, sodass das darauf gelagerte Heu gleichmäßig in Richtung der oberen Öffnung 2f des Gehäuses 2 gedrückt wird. Dies gewährleistet eine stetige und kontrollierte Heuzufuhr für das Tier, insbesondere für ein Pferd.

Die Druckfedern 8 sind mit einer Innen- und Außenführung ausgestattet, um ein Ausknicken zu verhindern und eine zuverlässige Kraftübertragung auf die Plattform 3 zu gewährleisten. Die Innenführung wird durch vier vertikal verlaufende Säulen 7 gebildet, die in den Eckbereichen der Bodenplatte 2a befestigt sind und auf denen die Druckfedern 8 jeweils wie auf einem Dorn aufgesetzt sind. Die Außenführungen werden durch vertikal verlaufende Hülsen 11 gebildet, die an den entsprechenden Eckbereichen der Grundplatte 3a der Plattform 3 befestigt sind und die Druckfedern 8 von außen umschließen.

In der niedrigsten Plattformposition (durch strichpunktierte Linien in Fig. 3 angedeutet) sind die Hülsen 11 und die Säulen 7 vollständig ineinandergeschoben, wobei die Druckfedern 8 dazwischen im maximal komprimierten Zustand angeordnet sind. Im Verlauf des Fütterungsprozesses nimmt die Heumenge ab, wodurch sich die Druckfedern 8 entspannen und die Plattform 3 samt Heu nach oben gedrückt wird. Die Hülsen 11 bewegen sich dabei teleskopartig vertikal an den stationären Säulen 7 entlang nach oben. Beim Aufwärtsbewegen der Plattform 3 werden die unteren Abschnitte der Druckfedern 8 sichtbar, während die oberen Abschnitte weiterhin in den Hülsen 11 verbleiben, die fest an der Grundplatte 3a der Plattform 3 angebracht sind. Die vertikalen Längen der Hülsen 11 und der Säulen 7 sind so bemessen, dass auch in der maximal ausgefahrenen Position, wie in Fig. 3 dargestellt, eine teilweise Überlappung zwischen ihnen erhalten bleibt. Dadurch wird eine gleichzeitige Innen- und Außenführung der Druckfedern 8 abschnittsweise sichergestellt.

In der Draufsicht gemäß Fig. 4 ist die gitterförmige Abdeckung 9, die die obere Öffnung 2f des Tierfuttermittelbehälters 1 abdeckt, besonders gut erkennbar. Wie bereits in Fig. 1 dargestellt, ist diese gitterförmige Abdeckung 9 gelenkig mit der Oberkante der Rückwand 2e verbunden. Im geöffneten oder halboffenen Zustand, wie in Fig. 1 gezeigt, kann die Grundplatte 3a gereinigt und insbesondere Restheu entfernt werden.

Um die obere Öffnung 2f zuverlässig durch die gitterförmige Abdeckung 9 zu verschließen, ist eine Verriegelungseinrichtung 10 in Form eines federbetätigten Hebels an der Vorderwand 2d des Gehäuses 2 vorgesehen, die in eine entsprechende Öse 15 an der Vorderkante der gitterförmigen Abdeckung 9 eingreift. Die gitterförmige Abdeckung 9 verhindert, dass das Tier das Heu auf der Grundplatte 3a unkontrolliert frisst, und verschließt im geschlossenen Zustand, wie in Fig. 4 gezeigt, die obere Öffnung 2f. Dadurch wird eine kontrollierte Heuzufuhr gewährleistet, die eine gesunde Futteraufnahme unterstützt.

Diese langsame Heuaufnahme simuliert das natürliche Grasen, indem das Tier, insbesondere ein Pferd, das Heu nur langsam durch die Öffnungen des Gitters abpflücken kann, was besonders verdauungsschonend ist. Eine unkontrollierte Heuaufnahme, wie bei einer Bodenverteilung, wird somit vermieden. Die in Fig. 4 dargestellten Querschnittsabmessungen des Gehäuses 2 sind an die Form und Größe der genormten Heuballen angepasst. Durch den in Verbindung mit Fig. 3 beschriebenen federbetätigten Mechanismus 4 wird der Heuballen während des gesamten Fütterungsprozesses kontinuierlich gegen die gitterförmige Abdeckung 9 gedrückt, sodass dem Tier, auch während längerer unbeaufsichtigter Phasen, wie zum Beispiel am Wochenende, Heu zum Abpflücken zur Verfügung steht. Dies reduziert den Personalaufwand erheblich.

Zusätzlich sind zwei weitere bevorzugte Ausführungsformen der Erfindung denkbar, die in den Figuren nicht dargestellt sind, jedoch innerhalb des Rahmens der Erfindung sowohl einzeln als auch in Kombination realisierbar sind.

Integrierte Befeuchtungseinrichtung: Eine in den Tierfuttermittelbehälter 1 integrierte Befeuchtungseinrichtung ist über einen Schlauchanschluss mit einer Wasserzufuhr verbunden, um das auf der vertikal verschiebbaren Plattform 3 gelagerte Tierfuttermittel, insbesondere einen Heuballen, zu befeuchten. Diese Befeuchtungseinrichtung kann beispielsweise als Sprühvorrichtung oder Tropfsystem ausgeführt sein, das bedarfsorientiert Wasser auf das Heu aufbringt. Durch die gezielte Befeuchtung des Heus wird dessen Qualität erhalten, Staubentwicklung reduziert und die Futteraufnahme für die Tiere angenehmer gestaltet. Die Integration der Befeuchtungseinrichtung in das Gehäuse 2 ermöglicht eine effiziente Wasserverwendung und erleichtert die Wartung des Systems. Zudem kann die Befeuchtung automatisch gesteuert werden, um eine konstante Feuchtigkeitszufuhr sicherzustellen und somit die Lagerung des Futters zu optimieren.

Sensorüberwachungseinheit: Eine in den Tierfuttermittelbehälter 1 integrierte Sensorüberwachungseinheit überwacht den aktuellen Füllstand des Tierfuttermittels mittels magnetischer, kapazitiver oder optischer Sensoren und stellt die entsprechenden Daten über eine mobile App bereit. Diese Sensorüberwachungseinheit ermöglicht es dem Tierhalter, den Füllstand des Futters in Echtzeit zu überwachen, Engpässe frühzeitig zu erkennen und die Futterzufuhr effizient zu planen. Magnetische Sensoren könnten die Nähe von Füllständen messen, kapazitive Sensoren die Futtermenge anhand von Kapazitätsänderungen ermitteln und optische Sensoren visuelle Signale zur Füllstandserkennung nutzen. Die kabellose Datenübertragung erfolgt über Bluetooth oder Wi-Fi, sodass der Tierhalter bequem von einem mobilen Gerät aus auf die Informationen zugreifen kann. Dies trägt zur Optimierung der Fütterungsprozesse bei, reduziert den manuellen Aufwand und verhindert Über- oder Unterfütterung der Tiere.

Diese zusätzlichen Ausführungsformen erweitern die Funktionalität des Tierfuttermittelbehälters 1 erheblich, indem sie sowohl die Qualität des Futters durch gezielte Befeuchtung verbessern als auch die Verwaltung und Überwachung der Futterbestände durch moderne Sensortechnologie erleichtern. Dadurch wird eine effizientere, hygienischere und benutzerfreundlichere Fütterungslösung für moderne Tierhaltungsbetriebe geschaffen.

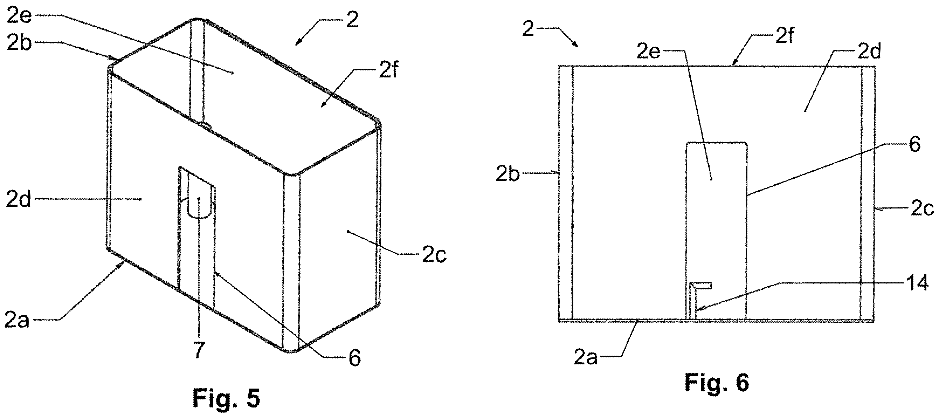

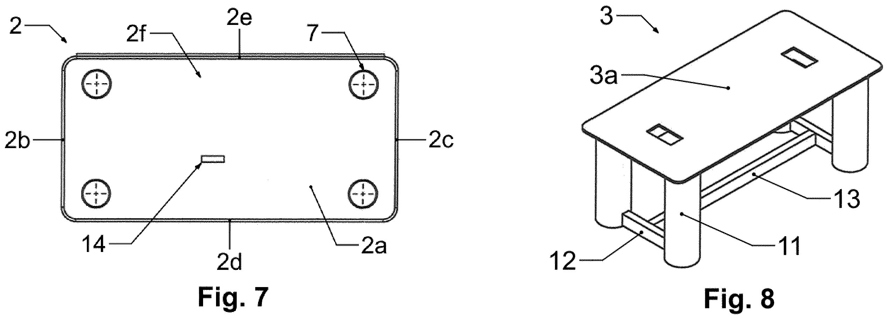

In Fig. 5 (isometrische Darstellung), Fig. 6 (Vorderansicht) und Fig. 7 (Draufsicht) ist das isolierte Gehäuse 2 des Tierfuttermittelbehälters 1 gemäß Fig. 1 bis 4 gezeigt, das heißt ohne die vertikal bewegliche Plattform 3, die Druckfedern 8 und die gitterförmige Abdeckung 9. Das Gehäuse 2 ist im Wesentlichen kubisch geformt und in Form und Abmessung auf die seitlich einzuführenden Heuballen abgestimmt. Es besteht aus einer rechteckigen Bodenplatte 2a, zwei kürzeren Seitenwänden 2b, 2c sowie einer längeren Vorderwand 2d und Rückwand 2e. Alle Kanten und Ecken des Gehäuses 2 sind abgerundet, um Verletzungen von Mensch und Tier zu verhindern.

Wie aus Fig. 5 und besonders Fig. 7 hervorgeht, sind in den vier Eckbereichen der Bodenplatte 2a, die durch eine rechteckige Platte mit abgerundeten Ecken gebildet ist, jeweils eine vertikal von der Bodenplatte 2a ausgehende Säule 7 befestigt, vorzugsweise angeschweißt. Die Säulen 7 fungieren als Innenführungen für die auf sie aufgesteckten zylindrischen Druckfedern 8, wodurch ein stabiler und geradliniger Bewegungsablauf der Druckfedern 8 während der vertikalen Bewegung der Plattform 3 gewährleistet wird. Eine Material- und Gewichtsersparnis wird dadurch erzielt, dass die Säulen 7 nicht massiv, sondern rohrförmig ausgeführt sind. Diese Säulen 7 des Gehäuses 2 bilden zusammen mit den zylindrischen Druckfedern 8 und den Hülsen 11 der Plattform 3 den federbetätigten Mechanismus 4, der dazu dient, die Plattform 3 in Richtung der oberen Öffnung 2f des Gehäuses 2 anzuheben (vgl. Fig. 3).

Der rechteckige, langgestreckte Schlitz 6, der an der Bodenplatte 2a beginnt und sich etwa über zwei Drittel der Gesamthöhe des Gehäuses 2 erstreckt, ist in der Vorderwand 2d vorgesehen (siehe Fig. 6). Dieser Schlitz 6 ermöglicht die Betätigung des Fußpedals 5, das fest mit der Plattform 3 verbunden ist, um diese in eine abgesenkte niedrige Position zu bringen. In dieser Position kann der Heuballen durch eine seitliche Öffnung in der Seitenwand 2b des Gehäuses 2 bequem in horizontaler Richtung eingeführt werden. Wie in Fig. 6 zu sehen, ist zur Fixierung der Plattform 3 in der niedrigen Position das L-förmige Verriegelungselement 14 an der Bodenplatte 2a angebracht, welches mit dem Fußpedal 5 in Eingriff gelangt.

In der Draufsicht nach Fig. 7 ist besonders gut zu erkennen, wie die vier Säulen 7 symmetrisch in den vier Eckbereichen der Bodenplatte 2a angeordnet sind. Diese Säulen 7 bilden die Innenführungen, welche die Druckfedern 8 als Dorne innenseitig führen. Durch die entsprechende symmetrische Anordnung der Druckfedern 8 an den vier Ecken der Bodenplatte 2a des Gehäuses 2, und damit auch an den vier Ecken der Grundplatte 3a der Plattform 3, wird eine gleichmäßige Druckverteilung auf die Plattform 3 ausgeübt, sodass ein Verkanten der Plattform 3 verhindert wird. Dies sorgt dafür, dass das auf der Plattform 3 gelagerte Heu gleichmäßig über die gesamte horizontale Querschnittsfläche gegen die gitterförmige Abdeckung 9 gedrückt wird, wodurch das Tier das Heu über diese gesamte Fläche gleichmäßig abzupfen kann. Mit dem Abnehmen des Heus wird das verbleibende Heu kontinuierlich durch die Druckfedern 8 nach oben gedrückt, sodass bis zum kompletten Verbrauch des Heuballens stets frisches Heu durch die gitterförmige Abdeckung 9 zur Verfügung steht.

Dies ermöglicht eine teilautomatische Zuführung des Heus für das Tier, insbesondere für Pferde, auf konstruktiv einfache Weise. Lediglich das Einführen eines neuen Heuballens muss manuell erfolgen, wobei auch dieser Vorgang durch das einfache Absenken der Plattform 3 mittels des Fußpedals 5 und die Arretierung der Plattform 3 mittels des Verriegelungselements 14 erheblich erleichtert wird und in kurzer Zeit durchgeführt werden kann.

Infolgedessen kann in modernen Ställen, die häufig eine Vielzahl von heufressenden Tieren beherbergen, der Personalbedarf erheblich reduziert werden. Dies stellt insbesondere an personalschwachen Wochenenden einen wesentlichen ökonomischen Faktor dar.

Obwohl nicht gesondert dargestellt, ist es im Rahmen der Erfindung möglich, den Tierfuttermittelbehälter 1 mit einem zusätzlichen Verschlussdeckel auszustatten. Dieser kann gelenkig mit der Oberkante der Rückwand 2e verbunden sein, um die obere Öffnung 2f vollständig zu verschließen. Ein solcher Verschluss dient insbesondere dazu, die Futteraufnahme gezielt zu unterbrechen, beispielsweise während der Reinigung des Behälters 1, zum Nachfüllen von Futter oder um sicherzustellen, dass keine Überfütterung erfolgt. Der Verschlussdeckel kann insbesondere auf seiner Oberseite im geschlossenen Zustand des Behälters 1 eine oder mehrere Einbuchtungen aufweisen, die als Kraftfuttermulden dienen. Diese Einbuchtungen ermöglichen die Zugabe von zusätzlichem Kraftfutter, zum Beispiel bei einer Futterumstellung oder um dem Tier neben dem Heu gezielt weitere Nährstoffe anzubieten.

Fig. 8 zeigt eine detaillierte isometrische Darstellung der Plattform 3, die im Gehäuse 2 des Tierfuttermittelbehälters 1 vertikal verschiebbar geführt wird, hier jedoch isoliert von ihrem umgebenden Gehäuse 2.

Die Plattform 3 umfasst die horizontale Grundplatte 3a, deren Oberseite zur Aufnahme des Tierfuttermittels, insbesondere Heu, dient. Diese Grundplatte 3a ist robust ausgelegt, das Futter gleichmäßig zu tragen, und gewährleistet eine stabile Druckverteilung, die von den Druckfedern 8 ausgeübt wird.

An der Unterseite der Grundplatte 3a der Plattform 3, die der Bodenplatte 2a des Gehäuses 2 zugewandt ist, befinden sich mehrere, vorzugsweise vier, fest angebrachte Hülsen 11 in den Eckbereichen der Grundplatte 3a. Jede dieser Hülsen 11 dient als Außenführung für eine vertikal verlaufende zylindrische Druckfeder 8, deren oberes Ende die Unterseite der Grundplatte 3a kontaktiert und deren unteres Ende sich auf der Bodenplatte 2a abstützt, wobei entsprechend dem Kompressionsgrad der Druckfedern 8 eine vertikale Kraft nach oben auf die Plattform 3 ausgeübt wird (siehe Fig. 3). Diese Hülsen 11 führen die Druckfedern 8 präzise und gewährleisten, dass die vertikale Kraft gleichmäßig auf die Plattform 3 ausgeübt wird, wodurch diese kontinuierlich nach oben in Richtung der oberen Öffnung 2f gedrückt wird.

Um eine stabile und verwindungssteife Struktur der Plattform 3 zu gewährleisten, sind die in den Eckbereichen angeordneten Hülsen 11 zusätzlich durch feste Verstrebungen 12, 13 miteinander verbunden. Jeweils zwei Hülsen 11, die sich in einer Richtung senkrecht zur Vorderwand 2d und Rückwand 2e gegenüberliegen, sind durch eine feste Querverstrebung 12 miteinander verbunden. Diese beiden Querverstrebungen 12 sorgen für eine verbesserte Stabilität der Plattform und verhindern ein mögliches Verkippen während der vertikalen Bewegung. Darüber hinaus sind die beiden Querverstrebungen 12 über eine zusätzliche feste Längsverstrebung 13 miteinander verbunden, die senkrecht zu den beiden Seitenwänden 2b, 2c verläuft. Diese Längsverstrebung 13 verstärkt zusätzlich die strukturelle Integrität der Plattform 3, sodass das Gewicht des auf der Grundplatte 3a befindlichen Tierfuttermittels gleichmäßig verteilt und eine störungsfreie vertikale Bewegung der Plattform 3 im Gehäuse 2 ermöglicht wird.

Die stabile Konstruktion der Plattform 3 sorgt für eine gleichmäßige Bewegung, die entscheidend dafür ist, Heu oder andere Futtermittel kontinuierlich nach oben zu befördern. So wird dem Tier, sei es ein Pferd, ein anderes Nutztier oder ein Wildtier, eine konstante und kontrollierte Futterzufuhr gewährleistet.

### Bezugszeichenliste

- 1: Tierfuttermittelbehälter
- 2: Gehäuse
- 2a: Bodenplatte
- 2b, 2c: Seitenwand
- 2d: Vorderwand
- 2e: Rückwand
- 2f: obere Öffnung
- 3: Plattform
- 3a: Grundplatte
- 4: federbetätigter Mechanismus
- 5: Betätigungselement (Fußpedal)
- 6: Schlitz
- 7: Säule
- 8: zylindrische Druckfeder
- 9: gitterförmige Abdeckung
- 10: Verriegelungseinrichtung
- 11: Hülse
- 12: Querverstrebung
- 13: Längsverstrebung
- 14: Verriegelungselement
- 15: Öse

## Patentansprüche

1. Tierfuttermittelbehälter (1), umfassend:
- ein Gehäuse (2) mit einer Bodenplatte (2a), zwei Seitenwänden (2b, 2c) sowie einer Vorderwand (2d) und einer Rückwand (2e);
- eine innerhalb des Gehäuses (2) vertikal verschiebbar geführte Plattform (3) zur Lagerung von Tierfuttermittel;
- einen federbetätigten Mechanismus (4) zur Anhebung der Plattform (3) in Richtung einer oberen Öffnung (2f) des Gehäuses (2);
- ein Betätigungselement (5) zur Absenkung und Fixierung der Plattform (3) in einer niedrigen Position; und
- eine seitliche Öffnung zum Einführen von Tierfuttermittel in den Tierfuttermittelbehälter (1), wenn die Plattform (3) in der niedrigen Position fixiert ist,
wobei der federbetätigte Mechanismus (4) so konfiguriert ist, dass nach dem Lösen des Betätigungselements (5) die Plattform (3) in Richtung der oberen Öffnung (2f) gedrückt wird, um eine kontinuierliche Tierfuttermittelzufuhr zu gewährleisten.

2. Tierfuttermittelbehälter (1) nach Anspruch 1, wobei das Gehäuse (2) und/oder die Plattform (3) aus Edelstahl, insbesondere Inox, und/oder Kunststoff gefertigt sind.

3. Tierfuttermittelbehälter (1) nach Anspruch 1 oder 2, wobei die Plattform (3) eine horizontale Grundplatte (3a) aufweist, die auf ihrer der oberen Öffnung (2f) zugewandten Oberseite das Tierfuttermittel trägt und an ihrer der Bodenplatte (2a) zugewandten Unterseite mehrere, bevorzugt vier in den Eckbereichen der Grundplatte (3a) angeordnete, Hülsen (11) aufweist, wobei jede Hülse (11) als Außenführung für eine sich vertikal erstreckende zylindrische Druckfeder (8) dient, die sich mit ihrer Oberseite an der Unterseite der Bodenplatte (2a) abstützt und eine vertikale Druckkraft nach oben gegen die Plattform (3) ausübt.

4. Tierfuttermittelbehälter (1) nach Anspruch 3, wobei bei vier in den Eckbereichen der Plattform (3) angeordneten Hülsen (11) zwei Hülsen (11), die sich jeweils in einer Richtung senkrecht zur Vorderwand (2d) und Rückwand (2e) gegenüberliegen, durch eine feste Querverstrebung (12) miteinander verbunden sind, und die beiden Querverstrebungen (12) wiederum durch eine feste Längsverstrebung (13), die senkrecht zu den Seitenwänden (2b, 2c) verläuft, miteinander verbunden sind.

5. Tierfuttermittelbehälter (1) nach Anspruch 3 oder 4, wobei die Bodenplatte (2a) mehrere, bevorzugt vier in Eckbereichen der Bodenplatte (2a) angeordnete, Säulen (7) aufweist, wobei jede Säule (7) als Innenführung für die sich vertikal erstreckende zylindrische Druckfeder (8) dient, die sich mit ihrer Unterseite an der Bodenplatte (2a) abstützt und eine vertikale Druckkraft nach oben gegen die Plattform (3) ausübt.

6. Tierfuttermittelbehälter (1) nach einem der Ansprüche 1 bis 5, wobei das Betätigungselement (5) ein mit der Plattform (3) fest verbundenes Fußpedal ist, das vom Bediener mittels des Fußes betätigbar und in der niedrigen Position fixierbar ist.

7. Tierfuttermittelbehälter (1) nach einem der Ansprüche 1 bis 6, wobei an der Bodenplatte (2a) ein Verriegelungselement (14), beispielsweise ein L-förmiger Winkel, befestigt ist, das in der niedrigen Position formschlüssig mit dem Betätigungselement (5) verriegelt ist, um dadurch das Betätigungselement (5) sowie die damit fest verbundene Plattform (3) in der niedrigen Position zu fixieren.

8. Tierfuttermittelbehälter (1) nach einem der Ansprüche 1 bis 7, wobei die Vorderwand (2d) einen sich von der Bodenplatte (2a) in vertikaler Richtung erstreckenden Schlitz (6) aufweist, durch den das Betätigungselement (5) von einem Bediener betätigbar ist.

9. Tierfuttermittelbehälter (1) nach einem der Ansprüche 1 bis 8, wobei die seitliche Öffnung eine gelenkig befestigte Klappe aufweist, die das einfache Öffnen und Schließen des Gehäuses (2) ermöglicht, wobei die Klappe entweder mit der Vorderwand (2d) oder der Rückwand (2e) gelenkig verbunden ist und im geschlossenen Zustand die gesamte Seitenwand (2b) bildet, oder wobei die Klappe mit der Seitenwand (2b) gelenkig verbunden ist und im geschlossenen Zustand einen Teil der Seitenwand (2b) bildet.

10. Tierfuttermittelbehälter (1) nach einem der Ansprüche 1 bis 9, wobei eine gitterförmige Abdeckung (9) gelenkig mit der Oberkante der Rückwand (2e) verbunden ist und über eine Verriegelungseinrichtung (10) an der Vorderwand (2d) verschließbar ist, um im geschlossenen Zustand die obere Öffnung (2f) abzudecken und eine rationierte Tierfuttermittelzufuhr zu ermöglichen.

11. Tierfuttermittelbehälter (1) nach einem der Ansprüche 1 bis 10, wobei ein Verschlussdeckel vorgesehen ist, der gelenkig mit der Oberkante der Rückwand (2e) verbunden ist, um die obere Öffnung (2f) vollständig zu verschließen und die Aufnahme von Tierfuttermittel zu stoppen, und wobei der Verschlussdeckel bevorzugt eine oder mehrere Einbuchtungen aufweist, die als Kraftfuttermulden dienen.

12. Tierfuttermittelbehälter (1) nach einem der Ansprüche 1 bis 11, wobei eine über einen Schlauchanschluss mit einer Wasserzufuhr verbundene Befeuchtungseinrichtung in den Tierfuttermittelbehälter (1) integriert ist, um das auf der vertikal verschiebbaren Plattform (3) gelagerte Tierfuttermittel, insbesondere einen Heuballen, zu befeuchten.

13. Tierfuttermittelbehälter (1) nach einem der Ansprüche 1 bis 12, wobei eine Sensorüberwachungseinheit integriert ist, die den aktuellen Füllstand des Tierfuttermittels im Tierfuttermittelbehälter (1) mittels magnetischer, kapazitiver oder optischer Sensoren überwacht und die entsprechenden Daten über eine mobile App bereitstellt.
